# EUROPEAN PATENT APPLICATION

(11) **EP 2 112 813 A1**
(43) Date of publication of application: **28.10.2009**
(21) Application number: 08007882.7
(22) Date of filing: 24.04.2008
(51) Int. Cl.: H04M 3/493, H04M 1/2745

(54) **Personal address book communication service**

(71) Applicant: Koninklijke KPN N.V., 2509 CH Den Haag (NL)
(72) Inventor: Van Steenbergen, Ate Sander, 9737 NN Groningen (NL); Alberts, Albert Willem, 9751 TC Haren (NL); Keijzer, Herman, 9727 DV Groningen (NL)
(74) Representative: Wuyts, Koenraad Maria

(57) **Abstract**

A communication service is provided for establishing via a communication network a communication from a first party to a second party. The service receives from the first party data including a first identifier (calling party ID) for identifying the first party to the service, and a second identifier (alias/nickname e.g. "Grandma") for identifying the second party to the service when combined with the first identifier. The data is used as an entry to a database for determining a communication address of the second party. The service then initiates the communication between the first and second parties on the basis of the communication address determined.

## Description

### FIELD OF THE INVENTION

The invention relates to a method of providing a service on a communication network. The invention further relates to a communication device for communicating via a communication network. The invention further relates to software for installing on a communication device.

### BACKGROUND ART

A typical user of a personal communication device, e.g., a telephone, an email client, etc., creates and maintains a personal address book. The address book is implemented as an electronic file stored on the device. The file lists the names and contact information of a relatively small number of people, parties or institutions. The listed people, parties and institutions arc those that the user contacts frequently, e.g., spouse, children, relatives, friends, co-workers, etc., up to and including the user's local favorite pizza delivery service. In addition, the address book also includes the contact information of people and of institutions that the user wants to keep at hand for emergency situations: police, ambulance, family doctor, neighbors, etc. The advantage of such an electronic personal address book is that contacting a listed party is as simple as selecting a predefined option in a menu accessible through the user-interface, e.g., a graphical user interface (GUI) of the device. Upon selection, the device processes the contact information associated with the selected party in order to initiate the communication. In contrast, if the user uses the communication device to contact a party not listed in his/her personal address book, he/she needs to have the correct contact information at hand and he/she has to enter this contact information through the device's user interface, e.g., a keyboard, before attempting to establish the communication.

If a party, listed in the user's personal address book, has changed his/her contact information, the user of the personal communication device needs to be informed about this change in order to be able to contact that party via the device. Upon being informed, the user can re-program the personal communication device, or edit the address book, so as to update this party's contact information. Usually, this is some kind of an ordeal as the user does not do this on a daily basis. The editing typically requires putting the device into an editing mode and then navigating through a menu of options. Accordingly, the device's manual has to be consulted each time anew, provided that the user can find it.

US patent 6,269,369, incorporated herein by reference, discloses a network-computer-based personal contact manager system. Users of networked clients maintain and update a set of user information which is stored in a relational database on a networked server. The personal contact manager system allows each user to specify, on an individual basis, which of their contacts are permitted to access respective data of their user information. In some cases, and assuming permission is granted, the system will issue notifications (e.g., by e-mail) to a user's contacts when the user changes his information or when a preset event, such as a birthday, as defined by the user, is to occur. The system also allows users to find contacts based on common group affiliations and notifies users when there are coincidences in their data (e.g., travel plans, astrological compatibility). The personal contact manager system supports the retrieval of information on the contacts of contacts, assuming such permission has been granted by the contacts and their contacts. The personal contact manager can also be used to synchronize the server database with a personal information management (PIM) database of the user and any contacts of the user, who have the appropriate permissions.

In the known system, each customer has his/her own customer-ID. A respective table is associated with each respective customer-ID. The table lists other customers as the contacts for this particular customer. A user of the known system looks for a contact on the basis of the contact's name in an alphabetical register.

For each specific user, the known system maintains a database of information about other users to whom the specific user has established a link. The personal address book of the specific user contains the information in the data fields that the other users have given the first user permission to view. Whenever another user changes any information in any data field of his/her data record, the information in that field is automatically updated in the information database of the specific user whom he/she has given permission to view the information in that data field.

### SUMMARY OF THE INVENTION

Users of the known system delegate the managing of personal contact information to a server. The server maintains a relational database for doing this. The known approach enables a person to update his/her contact information in a centralized database and enables other persons to be selectively notified of this.

The known system has some drawbacks with regard to user-friendliness. For example, contact information for a person, who is to be contacted and who is listed, can only be found by searching for the person's official name in an alphabetical register. The user then can view the contact information, view the context as formed by the listed contacts for the person, and possibly copy some of it down on a piece of paper for later use, e.g., for making a phone call to the telephone number listed as contact information. That is, the known system attempts to provide up-to-date contact information and contact contexts to a user interested in other persons listed, but changes to a communication address need to be synchronized manually with the device being used by the initiating party.

The inventors propose a service that also manages personal contact information. However, the invention approaches this concept from another angle. The invention delegates the managing of one's personal address book to a server in order to simplify the process of actually *initiating* the connection between the parties via the communication network, e.g., a telephone network, a data network for a voice-over-IP (VoIP) connection or for a video connection or for sending an email, etc. The invention also enables to personalize the entries in one's address book, e.g., by entering abbreviated names, aliases, nicknames or only the first names of the parties to be listed.

More specifically, the invention relates to a method of providing a communication service for establishing, via a communication network, a communication between an initiating party and a targeted party. The method comprises: receiving, from the initiating party, data representative of an identity of the targeted party with respect to the service; using the data as an entry to a database for determining a communication address associated with the identity; and controlling initiating the communication on the basis of the communication address determined. The data comprises a first identifier and a second identifier. The first identifier is operative to identify the initiating party with respect to the service. The second identifier forms, when combined with the first identifier, the identity of the targeted party with respect to the service.

The service receives specific data from a communication device of a user. The data comprises a first identifier that identities the user vis-à-vis the service. The second identifier identifies the targeted party with respect to this user. The identifier that identifies the targeted party vis-à-vis the service is formed by the combination of the first and second identifiers. Given the user's identifier vis-à-vis the service, and given the nickname or alias, compiled by the user, of the targeted party, the service is enabled to identify the targeted party vis-à-vis the service. Once the targeted party is identified with respect to the service, the targeted party's communication address can be determined. The service then controls the initiating of the communication on the basis of the communication address thus determined. In this manner, the database forms the interface between, on the one hand, the nickname assigned to the targeted party by the user and, on the other hand, the communication address of that targeted party.

In order for the service to map the combination of the user's identifier (with respect to the service) and the nickname of the targeted party (given by the user) on the identifier of the targeted party with respect to the service, a procedure as the following one may be followed. The party, now targeted, has given to the user, in advance, the party's identifier with respect to the service. Now, the user can tie the nickname of the party to the party's service identifier. The user can edit or have edited, or program or have programmed, his/her personal address book at the database of the service so as to include this party. The address book then stores the nickname, identifying the party to this user, as associated with this party's service identifier. Upon receipt of the data from this user, the data including the user's service identifier and the nickname, the service can determine the targeted party's service identifier and thereupon the associated communication address.

The user does not need to know, or to keep track of, other people's communication addresses. A communication address may change over time due to, e.g., moving house or moving office or changing jobs. The user knows whom he/she wants to contact and docs not need him/herself to translate the party's nickname into a communication address using a look-up table such as a telephone directory. The translation is delegated to a server. Note that it is irrelevant to the user, for purposes of communicating with the targeted party, whether or not the party's communication address has changed in the server's database. This is completely transparent to the user initiating the communication. Of course, if the party to be contacted has moved from the user's town to another town or to another country, the communication costs may be different, as between a local telephone call and a long distance call in telephony. The service may notify the user in advance, e.g., through an instant message via the data network or via a pre-recorded voice message, before actually establishing the communication so as to give the user time to abort the process if so desired.

Note that only the *combination* of the identifier of the initiating party with respect to the service and another identifier of the targeted party (and personal to the initiating party) eventually identifies the targeted party with respect to the service. The identifier of the targeted party as used by the initiating party is typically compiled by the initiating party him/herself. For example, if the compiled name is "Grandma", then this name carries no meaning for the purpose of identifying to the public a person named "Grandma". However, the name "Grandma" in combination with the identifier of the initiating party enables to identify this particular person. For example, the initiating party's identifier enables to identify the initiating party's address book and then, within this address book, the party listed as "Grandma".

In an example scenario, a user is responsible him/herself to update the database with regard to his/her own communication address. As the service has assigned different identifiers to different users so as to be able to identify each specific user with regard to the service, the service can determine the communication address of the specific user via his/her identifier vis-à-vis the service. Other scenarios for implementing updates are discussed further below.

Accordingly, the service in the invention enables the user to maintain a user interface, e.g., a graphical user interface (GU1) or a speech input interface, to the database with names or identifiers only meaningful to the user and not useful in general for identifying a person. The Grandma" example illustrates that any given name, nickname or string of characters, a single character or number, a graphical icon, or a sequence of phonemes can be used in the interface. The translation to the communication address takes place at the server. The communication address is then used by the server to initiate the communication, e.g., establish the telephone connection, or forwarding the email, etc.

As a result, the invention facilitates establishing contact via a communication network with as little interaction from the user as possible. The invention not only provides a user-friendly procedure for personal contacts, but can also be used to advantage in a business environment. For example, a customer with a bank has a personal account manager. In the invention, contacting the account manager, e.g., by telephone, involves submitting the customer's identifier together with a reference to "personal account manager". The service in the invention then uses this combination to automatically connect the customer to the relevant person. Note that this approach is not affected by personnel changes at the bank. For example, if the person currently acting as the customer's account manager goes on maternity leave, another person will sit in for her and act as this customer's personal account manager. The administrator at the bank will then change the telephone number associated with the entry of their account manager in the service of the invention to another telephone number of the substitute account manager. As a result, the service in the invention will route all incoming calls to this other person without anything being changed from the customer's perspective as regards contacting the personal account manager.

With reference to US patent 6,269,369, mentioned above, it is remarked that this publication neither teaches nor discloses the initiating of a communication through the service. Also, this publication neither teaches nor suggests keeping the actual communication addresses, e.g., telephone numbers, email addresses, etc., transparent to the initiating party by means of using service identifiers for all users in order to tie an address to a targeted party.

Reference is also made to known web-based email services, i.e., email services that are accessible through a web browser as opposed to through an email client. These services enable a user to maintain an address book with nickname entries that are tied to email addresses. Inserting the nickname instead of the email address causes the email to be sent to the associated email address. Note that the user him/herself must enter and maintain the addresses of his/her contacts in his/her own address book. Note that when an address changes, he/she must be informed about this. Note that there are no generic service identifiers that hide the communication addresses of his/her contacts.

In an embodiment of the invention, the data comprises a third identifier representative of one of multiple modes of carrying out the communication. The third identifier determines the controlling the initiating of the communication. In other words, the user causes the communication address to be automatically selected in the database as associated with the proper mode: a telephone call, an email, a chat, an Instant Message, a file transfer, a video message, SMS, a mobile telephone call, a video call, a mobile video call, an invitation to a game console, a chat on a TV, etc.

The service in the invention needs itself not be involved in managing or issuing communication addresses for the various communication modes. In this respect, the service can support any communication application.

The updating of a user's own communication address can even be carried out automatically using a web-service. This option could be interesting for communication addresses that may change relatively fast such as, e.g., Internet Protocol (IP) addresses. A computer, being assigned an IP address from a Dynamic Host Configuration Protocol (DHCP) server, can then automatically fill in this IP address into the service of the invention.

In a further embodiment of the invention, the initiating comprises connecting the initiating party to the targeted party via the communication network. In an alternative embodiment, the initiating comprises submitting the communication address to a communication device of the initiating party. In the latter scenario, the device is preferably configured for automatically initiating the communication upon receipt of the address.

As specified above, the combination of the service identifier of the initiating party and another identifier of the targeted party (and being personal to the initiating party) eventually identifies the targeted party to the service. In an embodiment, the mapping of the combination on the communication address within the service may be made dependent on, e.g., the time of the day, the day of the week, the geographic location of the initiating party, etc. At the server, a rule base can be used to define one or more conditions for the mapping. The rules are preferably specified by the targeted party. For example, the personal address book maintained at the server maps the combination of the initiating party's identifier and the personal identifier of the targeted party on a first telephone number of the targeted party during office hours and on a second telephone number of the targeted party in the evenings and during the weekend. As another example, the personal address book at the server maps the combination on the telephone number listed for the targeted party only during office hours.

An embodiment of the service of the invention, specified above, provides the option of selectively connecting the initiating party and the targeted party via the communication network either directly or via an intermediate station under control of the rule base. For example, a telephone call made by the initiating party is either put through to the telephone number of the targeted party or to the telephone number of a voice recorder depending on, e.g., the identity of the initiating party or any other attribute specified in the rule base. The voice recorder functionality can be provided at the service provider. The service then records the voice mail and forwards the recording via email to the targeted party to the email address specified by the latter. Alternatively, the voice recorder resides at the targeted party and is individually addressable via the communication network. The communication network address of the voice recorder is then selected under control of the rule base.

A further embodiment of the method of the invention provides for an editing mode wherein the initiating party is enabled to edit the second identifier in the database.

For completeness it is remarked here that existing telephone sets generally have a menu option to compile and store a personalized list of parties with their telephone numbers, for use in the "abbreviated-dialing" mode. In a menu, the user selects an entry, programmed by the user in advance that, upon selection by the user, initiates the dialing process. The programming associates a user-selected identifier for a person (e.g., "Grandma") with the person's telephone number. Upon selecting the entry "Grandma" the telephone starts dialing the telephone number, stored at the telephone, listed with "Grandma" so as to initiate the communication. In an embodiment of the invention, the abbreviated-dialing process is delegated to the server, requiring the identification of the address book of the initiating party if a user-selected identifier is being used to refer to a particular person to be communicated with. As a result, the address books can be centrally maintained and kept up-to-date by the listed parties themselves, or by the service provider upon receiving updates from the operator authorities who assign communication addresses to their subscribers, or in any other convenient way. Note that, in this manner, the actual communication addresses can remain transparent to the user.

In the invention, the first identifier identifying the user of the device to the service comprises, e.g., an identifier of the device, an identifier of the user as a subscriber to the service (e.g., as stored in a Subscriber Identity Module (SIM)) or a password entered by the user in order to log on to the service of the invention. With regard to using the password as identifier: this option has the advantage that the user can log on to the service via any network-enabled device, e.g., a PC at a friend's or at work, or in an Internet café. The service then gives the user access to his/her list of contacts via the PC's user interface, e.g., via a download, a web interface, or a web-based client, whereupon the further operation is similar to that in the scenarios discussed above.

The invention also relates to a communication device configured for communicating, via a communication network, with a targeted party. The device comprises a memory for storing a second identifier operative to identify the targeted party to a user of the device; and a user interface configured for enabling the user to select the second identifier. The device is configured for submitting, upon user selection of the second identifier, data to a server. The data is representative of an identity of the targeted party with respect to the server for enabling the server to determine a communication address associated with the identity. The data enables the server to determine the communication address associated with the identity of the targeted party. The data comprises a first identifier and a second identifier. The first identifier is operative to identify the user to the server. The second identifier forms, when combined with the first identifier, the identity of the targeted party with respect to the server.

The device in the invention is configured so as to provide the functionality as specified. The configuration is implemented using, e.g., dedicated electronic circuitry or dedicated software running on the device.

The device submits the data to the server via a data network, e.g., the Internet, different from the communication network. The device then also has a data network interface. Alternatively, the device submits the data via the communication network itself. In the example of the telephone communication, the data is submitted via the telephony communication network using, e.g., an in-band technology such as Dual-Tone Multi-Frequency (DTMF) signaling.

Upon having retrieved the communication address from the database, the server controls initiating the communication to be established on the communication network. For example, the device is configured for receiving the communication address from the server in response to the submitting of the data. The device is configured for, thereupon, preferably automatically (i.e., without any further user intervention) initiating the communication by means of activating the relevant communication client residing at the device and using the address received from the server. As another example, the server serves as a network switch to connect the relevant communication clients at the device of the initiating party and the communication device of the targeted party, or the server acts as a telephone switch that connects the telephone call from one device to the other device, upon having identified the latter's communication address (i.e., telephone number). The device of the invention is then configured for using the server as a router for the communicating with the targeted party via the communication network.

Note that an embodiment of the device in the invention can be pre-programmed for establishing communications with only a limited number of parties. The device's user interface only provides a limited number of options in the form of the second identifiers that identify the parties, who can be contacted via the device, to the user of the device. For example, if the device comprises a telephone, the user interface is configured for restricting the number of people to call from the device to a pre-determined selection as embodied by the list of second identifiers. Such a device may be interesting to parents who want their children to have only limited access to other people via their telephone or email client. Similarly, such a device can be kept lean for professional applications. For example, a (wireless) communication device has an interface to a telephone network and a data network interface to access a server via a data network. The server provides a user interface to an address book listing identifiers (e.g., names) identifying to the user of the device possible contact persons. The address book can be implemented as a hierarchical menu so as to quickly identify the proper person. Upon identification, the server submits in response the contact information, e.g., telephone number, as data to the device. The device is configured to automatically dial the telephone number received in order to set up the communication via the telephony network. Such an approach is advantageous to mobile users who need to keep in touch with their organization, and who identify people based on their job function, not (only) on the basis of their name. The server itself may thus maintain an up-to-date address book, tailored to its use within the organization, and personalized with respect to the individual who is using the device.

In an embodiment of the device in the invention, the device is configured for user selection, via the user interface, of a specific one of multiple modes for carrying out the communication. The data comprises a third identifier representative of the specific mode, and the device is configured for communicating in the specific mode via the communication network. A multi-functional communication device may have various client applications running to provide multiple communications options, e.g., telephony, email, etc. The third identifier enables to determine the correct address associated with the desired mode of communicating: telephone or email.

The invention also relates to software for installing on a communication device such as, e.g., a telephone, a computer, a mobile phone, a smartphone (a result of converging technologies including telephony and, e.g., digital cameras, navigation devices, media players, etc.), a laptop PC, a personal digital assistant (PDA), etc. The software is operative to configure the device for communicating, via a communication network, with a targeted party in the following manner. The device comprises a memory and a user interface. The software comprises: first instructions for configuring the device to retrieve from the memory a second identifier operative to identify the targeted party to a user of the device; second instructions configuring the device for enabling the user to select the second identifier in the user interface; and third instructions configuring the device for submitting data to a server upon user selection of the second identifier. The data is representative of an identity of the targeted party with respect to the server for enabling the server to determine a communication address associated with the identity. The data comprises a first identifier and a second identifier. The first identifier is operative to identify the user to the server, whereas the second identifier forms, when combined with the first identifier, the identity of the targeted party with respect to the server.

Preferably, the software comprises fourth instructions configuring the device for using the server as a router for the communicating with the targeted party via the communication network. Preferably, the software comprises fifth instructions configuring the device for receiving the communication address from the server and for automatically initiating the communication upon receipt of the communication address. Preferably, the software comprises sixth instructions for configuring the device for user selection, via the user interface, of a specific one of multiple modes for carrying out the communication. The data, as submitted to the server, comprises a third identifier representative of the specific mode. The software comprises seventh instructions for automatically configuring the device for communicating in the specific mode via the communication network. Preferably, the software comprises eight instructions for configuring the device to provide an editing mode wherein the user is enabled to edit the second identifier.

The software is a commercially interesting product, and can be provided as an aftermarket add-on or as an upgrade so as to enable users of communication devices, e.g., telephones, mobile telephones, smartphones, computers, laptop PCs, and PDAs, to use the service in the invention.

In order to clarify the invention within a proper context, reference is made to file synchronization technologies. Synchronization of files is used in order to maintain the same versions of files existing on multiple electronic data processing devices. For example, file synchronization is used on a telephone to synchronize its personal address book with an address book on a computer. The Open Mobile Alliance (OMA) works on a Data Synchronization specification that addresses the synchronizing of changes in a personal address book and of calendar information from computers to mobile telephones. Note that the known synchronization technology plays a role in the configuration phase of a data processing system, e.g., a telephone, to synchronize files, and is itself not used in operational use of the telephone per individual communication session as specified in the invention. Moreover, in the invention, only the addition of new nicknames, the deletion of obsolete nicknames or the changing of existent nicknames need to be synchronized with the user's communication device and the server, because the actual communication addresses remain at the database of the server. In the invention, the user determines the nicknames. As a contact of the user does not change as a person, changes in nicknames are much less frequent than changes in addresses, as is the case in the known approaches. Note that a change in a nickname is not critical to communication initiation, contrary to a change in the communication address.

In order to clarify the invention within a proper context, reference is also made to broker web sites that enable two parties to get into contact with each other via a communication network without either party having the network address of the other party. For example, a seller of a vintage automobile has information about his/her car advertised on a web site dedicated to prewar cars, and an interested party can submit a request for additional information by email to the site's operator. The operator then forwards the message from the interested party to the seller without disclosing the latter's contact information to the former. Note that in the invention, the targeted party is identified with respect to the communication network, only under control of the combination of the identifier of the initiating party with respect to the service of the invention and another identifier to identify the targeted party with respect to the initiating party itself.

In order to clarify the invention within a proper context, reference is also made to call-forwarding. A person uses call-forwarding to automatically route an incoming call at his/her telephone to another telephone. Note that the invention is different in that the targeted party is identified with respect to the communication network, only under control of the combination of the identifier of the initiating party with respect to the service of the invention and another identifier to identify the targeted party with respect to the initiating party.

### BRIEF DESCRIPTION OF THE DRAWING

The invention is explained in further detail, by way of example and with reference to the accompanying drawing, wherein:
Fig.1 is a block diagram of a system used in the service of the invention; and
Fig.2 is a diagram showing different address books of different subscribers to the service of the invention.

Throughout the Figures, similar or corresponding features are indicated by same reference numerals.

### DETAILED EMBODIMENTS

As specified above in general terms, the invention relates, among other things, to a communication service for establishing via a communication network a communication from a first party to a second party. The service receives from the first party data including a first identifier for identifying the first party to the service ("service identifier") and a second identifier for identifying the second party to the first party. The combination of first and second identifiers identifies the second party to the service, i.e., the combination gives the service identifier of the second party. The data is used as an entry to a database for determining a communication address of the second party. The service then initiates the communication to the second party on the basis of the communication address determined.

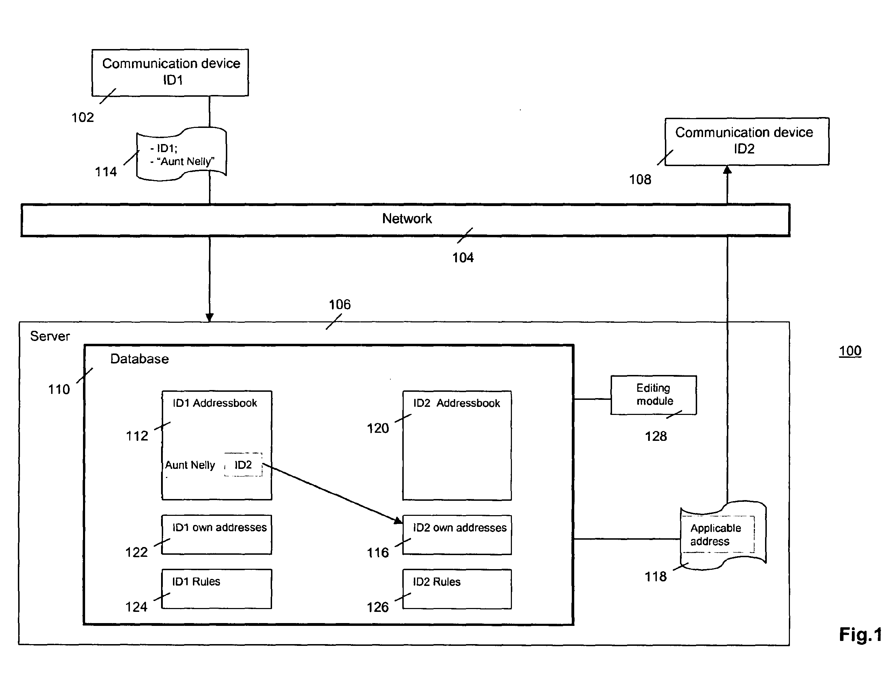

Fig. 1 is a block diagram of a communication system 100 in the invention. System 100 comprises a first communication device 102 of a user with service identifier ID1, a communication network 104, a server 106, and a second communication device 108 of a user with service identifier ID2. Server 106 comprises a database 110. Network 104 comprises all intermediate equipment needed to have device 102 communicate with device 108. Devices 102 and 108 each comprise, e.g., a telephone, or an email client, or an SMS client, or a videoconferencing client, or a Session Initiation Protocol (SIP) client, etc., or another personal communication client, or a combination thereof.

In the following scenario, devices 102 and 108 both are assumed to be telephones, only in order to illustrate the invention by way of example and not to be interpreted as restricting the field of application of the invention. The user of device 102 wants to communicate to the user of device 108 via their devices 102 and 108. Note that the user of device 102, or the service of the invention, does not know which device is being used as device 108 of the other user, as device 108 is not connected to the service. The user of device 102 uses his personal address book 112 stored in database 110, listing the user of device 108 with her nickname "Aunt Nelly", together with her service identifier ID2. Device 102 is configured to present to its user a list of nicknames selectable in a menu through a user interface (UI) of device 102, e.g., an LCD display monitor with a touch screen or with navigation buttons to control a moveable highlight, etc. Upon activating device 102, its user selects from the menu the nickname "Aunt Nelly". Device 102 transmits data 114 to server 106. Data 114 includes service identifier ID1 and a representation of "Aunt Nelly". This transmission can be using network 104 or another network (not shown) suitable for such transmission.

The representation of "Aunt Nelly", as submitted to server 106, can be this very string of letters, or any other data that serves to identify the person "Aunt Nelly" in address book 112. That is, the representation of the person with the nickname "Aunt Nelly" in the UI of device 102 can differ from the representation of the data submitted to server 106 in order to identify the person "Aunt Nelly" in address book 112. For example, the list presented in the UI of device 102 is an ordered list reflecting a similar order in address book 112. The name "Aunt Nelly" occurs in the UI list at a certain location that corresponds to a certain location in address book 112. It then suffices to send the coordinates of this location (c.g., a rank) instead of the string of characters "Aunt Nelly" in order to identify Aunt Nelly's service identifier ID2 in address book 112.

The expression "nickname" refers to, e.g., a name given by the user of device 102 to the user of device 108, which is used within the user's social environment, or a pet name that is only used in the user's personal environment. The nickname may also be the official name of the user of device 108, or any string of characters.

Upon receipt of the data from device 102, server 106 selects address book 112 on the basis of the identifier ID1 of the user of device 102. The user's identifier can be, e.g., a personal code for logging on to the service of the invention and entered by the user into device 102 per communication session. Alternatively, the log-on code is pre-programmed into device 102 and is automatically submitted when device 102 contacts server 106. As yet another alternative, the identifier can be the unique identifier of device 102 itself.

In an embodiment of the invention, the data as submitted by device 102 may also include a book identifier to identify a specific one of multiple address books of the user of device 102, stored at database 110. Using multiple address books helps the user to organize his/her contacts, e.g., by having a profession-related address book and a personal address book that are individually accessible.

Server 106 uses the combination of ID1 and the nickname "Aunt Nelly" (or corresponding data such as the rank in the list) in order to retrieve from address book 112 the relevant service identifier ID2, which identifies the user of device 108 with respect to server 106. Identifier ID2 is then used to determine the communication address (here: telephone number) associated with the party referred to by the nickname "Aunt Nelly".

In an example scenario, the identifier ID2 is used to identify, in database 110, entries 116 representative of the contact information of the user with service identifier ID2.

Upon having retrieved the communication address 118 from entries 116, server 106 initiates the communication to be established on communication network 104. For example, device 102 is configured for receiving communication address 118 from server 106, and for thereupon automatically initiating the communication by means of activating the relevant communication client residing at device 102 using the address received. As another example, server 106 serves as a network switch to connect the relevant communication clients at devices 102 and 108, or as a telephone switch that connects the telephone call from device 102 to device 108, upon having identified communication address 118.

Note that device 102 can be configured only for communicating via above procedure, e.g., by means of submitting data 114 to server 106. The UI of device 102 then only enables selecting an addressee listed in address book 112. Generally, however, device 102 also has a user interface, e.g., a keyboard, for manually entering addresses to select the parties to be communicated to in a conventional manner.

The users of devices 102 and 108 are known to server 106 by their subscriber identifiers ID1 and ID2, respectively. Each of subscribers ID1 and ID2 may have compiled their personal address books: address book 112 for subscriber ID1, introduced above, and an address book 120 for subscriber ID2. Subscriber ID1 has made entries 122 of his/her own contact addresses (e.g., telephone numbers, email addresses, etc.). Subscriber ID2 has her contact information in entries 116, introduced above. Subscribers ID1 and ID2 may also have specified rules under entries 124 and 126, respectively. The rules are used to control the communication, initiated by subscriber ID1, in accordance with the preferences declared by targeted subscriber ID2. This is explained in more detail further below.

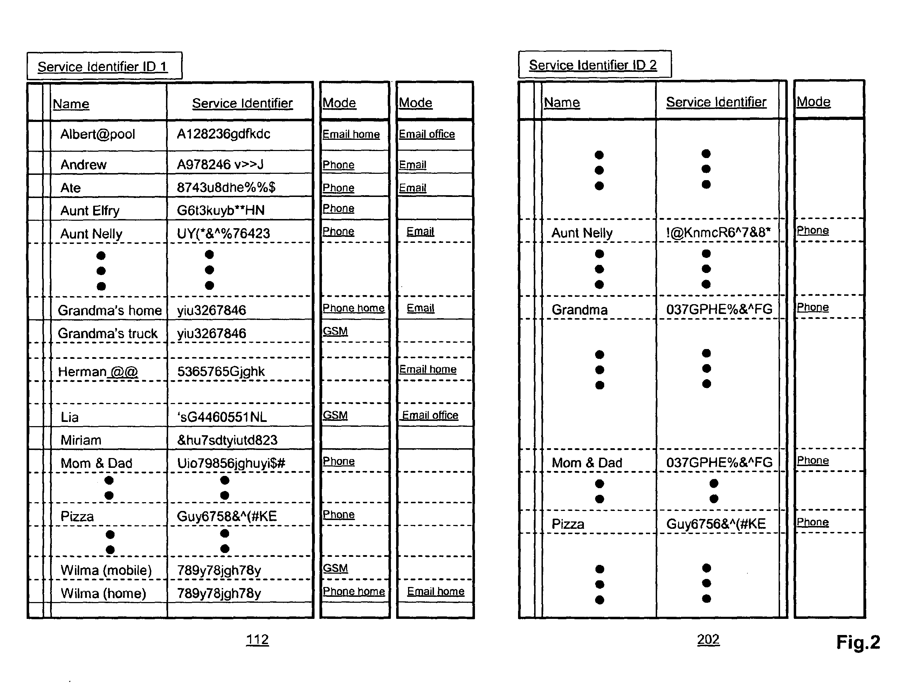

Fig.2 gives two examples, 112 and 202 of personal address books in database 110. Personal address book 112 has been compiled for the subscriber with service identifier ID1, and personal address book 202 has been compiled for another subscriber with a service identifier ID2. Each of books 112 and 202 has a column of entries under a header "Name", a column of entries under a header "Service Identifier" and one or more columns of entries under a header "Mode". The entries under "Name" have been entered by the respective subscriber, and indicate persons by, e.g., their first name or their nickname to identify them to the respective subscriber, and (local) organizations (here e.g., a pizza delivery service) by one or more terms given by the subscriber to identify to the subscriber the relevant organization (e.g., "pizza"). Under the header "Service Identifier" arc listed the identifiers that identify to the service the person or party, whose nickname or alias is given in the same row under the column "Name", Under the header(s) "Mode" arc listed the identifiers that indicate one or more modalities of communication available to the subscribers with identifiers ID1 and ID2 with regard to the persons listed by nickname in their respective address books 112 and 202.

As mentioned above, the subscriber with service identifier ID 1 has an address book 112 containing nicknames and service identifiers, and the subscriber's own communication addresses 122, and rules 124 that this subscriber wants to have applied to his/her communications. The quantity "Mode" can have a specific value (e.g., the mode is set to "telephone", "mail", "fax", "TV", "FTP", "HTTP", etc.). The subscriber with identifier ID1 has specified rules 124 for communications, incoming at the communication device(s) of this subscriber and/or outgoing from this subscriber's device(s). The combination of: service identifier ID1, plus a nickname from this subscriber's address book plus an indicated mode of communication is converted at server 106 into the combination of service identifier ID1 plus the service identifier ID2 of the party, addressed via a nickname by the subscriber with identifier ID1, plus the communication mode indicated. This result is then used to determine the communication address of the party with service identifier ID2. However, the party with identifier ID2 has its own rule set 126 in order to determine whether or not a communication address is going to be used at all for a communication from the subscriber with identifier 1 and, if so, which one and for what communication mode. For example, the rules of the party with service identifier ID2 determine which communication address is convenient in view of, e.g., the time of the day and/or the identity of the initiating subscriber having identifier ID1. The party may even overrule the communication mode specified by the initiating subscriber. For example, although the subscriber with identifier ID1 wanted a video call to be established with the party of identifier ID2, the latter accepts only a normal telephone call based on its own rule set.

Address books 112 and 202 have been compiled for different subscribers. For example, the subscriber of address book 112 has entered the nicknames and corresponding service identifiers, the service identifers as received from the relevant party. Alternatively, the subscriber may have given permission to the relevant parties to enter their service identifiers and nicknames or aliases into book 112. This can be done directly by the relevant parties or indirectly through intervention of the provider of the service in the invention, serving as a facilitator or broker.

As to the compiling, consider the following example. A person "A" subscribes to the service of the invention and is assigned a service identifier for identifying person "A" with respect to the service. Person "A" is given access to database 110. Person "A" enters his/her contact information into database 110 for one or more modes of being communicated with. For example, person "A" enters his/her home telephone number and/or mobile telephone number and/or email address and/or office telephone number, and/or web site URL, and/or MSN address, and/or TV address, and/or fax address, etc. Person "A" also enters his/her rules, or selects from a menu from among a plurality of pre-determined rules, to be made applicable to his/her communication preferences. Person "A" also compiles his/her address book, e.g., similar to address book 202 by means of entering nicknames, aliases or other identifiers for his/her contacts, together with the service identifiers of his/her contacts. Now consider the scenario that person "A" wants to add a person "B" as a new contact to his/her address book, and that the person "B" is also a subscriber to the service of the invention. That is, person "B" has also compiled his/her own contact information and rules. Person "B" then tells or otherwise supplies to person "A" the service identifier of person "B" or a particular updating identifier that identifies person "B" to person "A" within the service and only for the purpose of enabling person "A" to update his/her own address book on server 106. Now person "A" instructs server 106 to tie person "B" to a new entry (by means of an alias or nickname) in the address book of person "A", via the service identifier or updating identifier of person "B". Accordingly, when person "A" selects from his/her entries, personalized via aliases or nicknames, the new contact person "B" in order to initiate the communication with person "B", server 106 is enabled to uniquely identify the contact information of person "B". The communication can then be established, subject to the rules applicable to person "B".

The parties listed with their service identifiers have provided to the service their own contact information, e.g., telephone numbers, email addresses, etc., for being associated with their service identifier. Grandma of book 112 has supplied her home telephone number, the telephone number of her (very) hands-free mobile telephone built into her truck by her loving grandson, and her home email address.

As specified above, database 110 also comprises entries 124 and 126 that specify a respective rule base for the subscribers with service identifiers ID 1 and ID2. The rules in rule base 126 can be used to define one or more conditions to control the mapping of the combination of the service identifier ID1 and the nickname "Aunt Nelly" on the relevant communication address of the person referred to by service identifier ID2. The rules are preferably specified by the person with service identifier ID2. For example, a rule can be specified that maps the combination of ID1 and "Aunt Nelly" on a first telephone number of the person with service identifier ID2 during weekdays and on a second telephone number of this person during the weekend. As another example, a rule specifies that the combination is mapped on the telephone number listed for subscriber ID2 during office hours, and nothing else before and after office hours. As yet another example, a rule is specified to map the combination on the home telephone number of subscriber ID2 by default. As still another example, a rule may selectively map the combination of ID1 and "Aunt Nelly" onto a specific one of multiple telephone numbers under control of service identifier ID1, i.e., the service identifier of the initiating party. For example, the subscriber with service identifier ID2 ("Aunt Nelly") has specified in her rule base that only her nephew Peter and her elder sister Aunt Elfry can get access to her via her mobile phone. Other parties may select a mode to be connected to Aunt Nelly's mobile phone but won't be connected as Aunt Nelly has ruled that out.

The listed parties in an address book may update their contact information directly or submit updates to the service provider. In general, the contact information for an individual party is unique within the communication network. That is, the identity of a certain party determines their contact information and vice versa. Accordingly, authorities or other service providers, who assign contact information to a party or update their contact information within their respective communication services, can be given access to the service of the invention in order to submit updates to be processed by the service provider. For example, a person may move to another town or country, and subscribe anew to a local telephone company. As a consequence, their telephone number changes. The telephone company may then submit, to the service in the invention, information about the change of the telephone number for this individual person. For example, the information may be formatted as "please change the telephone number XXXXXX to telephone number YYYYYYY". Alternatively, the service provider may use the link between the previous version of the contact information and the official name of the individual person to determine the changed contact information from inspection of (public) official records. Alternatively, at server 106, address books 112 and 202 include per entry the official name (not shown) of the listed party, preferably with additional information (e.g., current street address) so as to be able to uniquely identify the party whose contact information is to be updated according to a notification using this official name to identify the relevant person. Note that these street addresses can also be treated in a way similar to that discussed above with regard to any other addressable communication address such as an email address or telephone number. These street addresses can be used for printed matter communication (such as email to printed letter) or for location-based services. With regard to the lattcr, the client device comprises a personal navigational device, hand-held or built-in into a car,. The personal navigation device of a subscriber can request from server 106, e.g., a street address and a postal code (such as the ZIP code used in the US) of a person on the basis of the subscriber's service identifier and the nickname of the person in the subscriber's address book.

When, in operational use of the service, the user wants to select a party to communicate with, the user interface provides the user only with the names, nicknames and/or other descriptive items that he/she has entered to identify the selected party to him/herself. The user interface can be a visual interface, e.g., a GUI, or an auditory user interface, e.g., rendering the name through pre-recorded voice or speech synthesis. Within this context, reference is made to US patent 6,978,127, herein incorporated by reference. The communication information remains transparent to the user as selecting the "name" entry initiates the communication process as discussed above.

Now consider the fact that the listings in address books 112 and 202 have several names in common. For example, the entries "Aunt Nelly"; "Grandma"; "Mom & Dad"; and "Pizza" occur in both books 112 and 202. These entries are commonly used on the conventional abbreviated-dialing lists in known telephones. Most of us have, at some time in our lives, a Grandma, a mom and dad, a favorite Aunt, and do like pizza. Grandma in address book 112 has two entries: one for contacting her at home and one for her (very hands-free) telephone mounted in her vintage pick-up truck that she still uses for her daily shopping trips. At home, Grandma of address book 112 has available a telephone as well as email. As address books 112 and 202 are compiled for different users, the persons referred to by the same nickname are probably not identical. Also, if the user of address book 112 lives in a town different from the hometown of the user of address book 202, the pizza delivery services, associated with the entry "pizza", are different services. This is illustrated by the fact that Grandma in address book 112 and Grandma in address book 202 have different service identifiers to identify them with respect to the service in the invention. Similarly, the Pizza entries in books 112 and 202 have different service identifiers.

Subscriber ID1 has configured the entries in the user interface of communication device 102 and in address book 112. In order to contact Grandma via her (very) hands-free mobile phone subscriber ID1 selects the entry "Grandma's truck". Another subscriber has an address book (not shown) with an entry to contact this same Grandma. This other subscriber has configured his/her address book so as to have to select "Grandma" first and then the mode "GSM". In both scenario's the data submitted from their respective communication devices to server 106 include their own respective service identifiers and the nickname for Grandma, as well as an identifier that indicates the mode of communication (here: Grandma's very hands-free mobile phone). Preferably, the receiving party determines, via his her rule base, the communication address and/or communication mode to be used in the communication initiated by the initiating party.

Subscriber ID1 selects from the menu at his/her communication device 102, the entry "Aunt Nelly" for initiating a telephone call to his/her godmother in order to congratulate her on her 75-th birthday again, like last year and the year before that (Aunt Nelly is one of Grandma's younger sisters). Device 102 submits to server 106 the identifier ID1 together with data representative of the entry "Aunt Nelly". The entry "Aunt Nelly" can be represented by, e.g., the text string "Aunt Nelly" itself, or by the number of this entry in the ordered list of entries of address book 202, etc. Server 106 identifies in database 110 address book 202 as associated with the subscriber having identifier ID1, and also identifies the service identifier "UY(*&^%76423" as associated with "Aunt Nelly" listed in book 202. This Aunt Nelly, being a subscriber to the service herself, has supplied to the service her telephone number. Once server 106 has identified this telephone number, server 106 initiates the call via network 104 as described above. If the subscriber with identifier ID2 submits to server 106 his/her identifier ID2 together with data representative of "Aunt Nelly" in order to make a call to his/her Aunt Nelly, server 106 now identifies address book 204, and the entry "Aunt Nelly" in address book 204. This Aunt Nelly has a service identifier "!@KnmcR6^7&8*" that is different from the service identifier "UY(*&^%76423" of Aunt Nelly in address book 202. Accordingly, the first Aunts Nelly and the second Aunt Nelly have two different service identifiers and arc therefore, probably, two different persons.

Device 102 may support different communication clients, e.g., a telephone and email. Each client is associated with a different communication address, here: telephone number and email address, respectively. Accordingly, different communication modes are relevant depending on which client is being used by the user of device 102. If the user of device 102 wants to send an email to Aunt Nelly, he/she has opened the email client. In the email client, a list of nicknames is available through a menu so as to select the addressee. If the user now intends to send an email to his/her "Aunt Nelly", the email with addressee "Aunt Nel ly" is sent to server 106, together with an identifier of the user of device 102. Server 106 consults database 110 and identifies address book 202. As the context signals to server 106 that the communication is now to be via email, server 106 uses the email address listed for Aunt Nelly with service identifier "UY(*&^%76423" in order to forward the email to the proper email address. Accordingly, the data submitted to server 106 comprises an additional identifier representative of one of multiple modes of carrying out the communication, here telephone and email.

With regard to configuring the service of the invention, the following is noted.

Preferably, server 106 comprises an editing module 128. Module 128 provides an editing interface to an authorized person for editing the information stored in database 110. For example, the user of communication device 102 wants to add the name and communication address of a new acquaintance to his/her address book. The user then accesses his/her address book in database 110 and adds the name, or nickname, together with the service identifier of the acquaintance. Access via editing module 128 can be accomplished, e.g., through a data network (not shown separate from network 104) and an Internet client (e.g., the user's home PC, not shown). Alternatively, the user may call the server's help desk by telephone and provide his/her authorization, e.g., through the telephone's touch tones. This results in the call being forwarded to an operator, whom can be requested to modify the address book. The operator can be a human operator. Alternatively, the operator is implemented in software that guides the user via speech instructions towards entering the proper characters for nickname and communication address. This is a conventional technology used, e.g., by public institutions, that provide speech driven menu's via a telephone.

As another example, authorities assigning communication addresses (email addresses, telephone numbers, etc) may be provided access to database 110 via editing module 128 in order to delete or replace an existing address. Note that such an authority merely provides information about existing addresses, and that the authority is not necessarily been given access to the individual address books of the subscribers to the service in the invention. If an address changes or gets inactivated, the party previously listed as associated with that address has changed addresses or has terminated the contract with the communications authority. In these cases, it suffices for the authority to notify server 106 of the change or deletion. Server 106 then replaces the listed address by the new address in database 110 or deletes the address from database 110 via editing module 128. In the above, it has been assumed that there is a one-to-one relationship between a party and its communication address, tying only one party (person, family, organization) to one address and one address to one party.

## Claims

1. A method of providing a communication service for establishing, via a communication network (104), a communication between an initiating party (102) and a targeted party (108), the method comprising:
receiving, from the initiating party, data (114) representative of an identity of the targeted party with respect to the service;
using the data as an entry to a database (110) for determining a communication address associated with the identity; and
controlling initiating the communication on the basis of the communication address determined;
wherein:
the data comprises a first identifier and a second identifier;
the first identifier is operative to identify the initiating party to the service; and
the second identifier forms, when combined with the first identifier, the identity of the targeted party with respect to the service.

2. The method of claim 1, wherein the initiating comprises connecting the initiating party to the targeted party via the communication network.

3. The method of claim 1, wherein the initiating comprises submitting the communication address to a communication device of the initiating party.

4. The method of claim 1, wherein:
the data comprises a third identifier representative of one of multiple modes of carrying out the communication; and
the third identifier determines the controlling.

5. The method of claim 1, providing an editing mode wherein the initiating party is enabled to edit the second identifier in the database.

6. A communication device (102) configured for communicating, via a communication network (104), with a targeted party (108), wherein the device comprises:
a memory for storing a second identifier operative to identify the targeted party to a user of the device; and
a user interface configured for enabling the user to select the second identifier; and wherein:
the device is configured for submitting, upon user selection of the second identifier, data to a server (106);
the data is representative of an identity of the targeted party with respect to the server for enabling the server to determine a communication address associated with the identity;
the data comprises a first identifier and a second identifier;
the first identifier is operative to identify the user to the server; and
the second identifier forms, when combined with the first identifier, the identity of the targeted party with respect to the server.

7. The device of claim 6, configured for using the server as a router for the communicating with the targeted party via the communication network.

8. The device of claim 6, configured for receiving the communication address from the server and for initiating the communication upon receipt of the communication address.

9. The device of claim 6, wherein:
the device is configured for user selection, via the user interface, of a specific one of multiple modes for carrying out the communication;
the data comprises a third identifier representative of the specific mode; and
the device is configured for communicating in the specific mode via the communication network

10. The device of claim 9, configured for providing an editing mode wherein the user is enabled to edit the second identifier.

11. Software for installing on a communication device (102) for configuring the device for communicating, via a communication network (104), with a targeted party (108), wherein:
the device comprises a memory and a user interface;
the software comprises:
first instructions for configuring the device to retrieve from the memory a second identifier operative to identify the targeted party to a user of the device;
second instructions configuring the device for enabling the user to select the second identifier in the user interface; and
third instructions configuring the device for submitting data to a server (106) upon user selection of the second identifier;
wherein:
the data is representative of an identity of the targeted party with respect to the server for enabling the server to determine a communication address associated with the identity;
the data comprises a first identifier and a second identifier; the first identifier is operative to identify the user to the server; and
the second identifier forms, when combined with the first identifier, the identity of the targeted party with respect to the server.

12. The software of claim 11, comprising fourth instructions configuring the device for using the server as a router for the communicating with the targeted party via the communication network.

13. The software of claim 11, comprising fifth instructions configuring the device for receiving the communication address from the server and for initiating the communication upon receipt of the communication address.

14. The software of claim 11, wherein:
the software comprises sixth instructions for configuring the device for user selection, via the user interface, of a specific one of multiple modes for carrying out the communication;
the data comprises a third identifier representative of the specific mode; and
the software comprises seventh instructions for configuring the device for communicating in the specific mode via the communication network.

15. The software of claim 11, comprising eight instructions for configuring the device to provide an editing mode wherein the user is enabled to edit the second identifier.
